# NEUE EUROPÄISCHE PATENTSCHRIFT

(11) **EP 1 935 777 B2**
(45) Veröffentlichungstag und Bekanntmachung des Hinweises auf die Entscheidung über den Einspruch: **05.04.2017**
(45) Hinweis auf die Patenterteilung: 05.06.2013
(21) Anmeldenummer: 08003506.6
(22) Anmeldetag: 28.03.2000
(51) Int. Cl.: B62M 25/04, B62K 23/06

(54) **Schalter für ein Fahrradgetriebe**
Switch for a bicycle gear
Commutateur pour un engrenage de vélo

(30) Priorität: 03.04.1999 DE 19915336
(43) Veröffentlichungstag der Anmeldung: 25.06.2008
(62) Teilanmeldung aus: 00918838.4
(73) Patentinhaber: SRAM Deutschland GmbH, 97404 Schweinfurt (DE)
(72) Erfinder: Assel, Martin Dipl.-Ing., 91593 Burgbernheim (DE)
(74) Vertreter: Weickmann & Weickmann PartmbB

(56) Entgegenhaltungen:
- EP-A- 0 361 335
- EP-A1- 0 790 175
- EP-A1- 0 940 334
- EP-A1- 0 940 334
- EP-A2- 0 352 733
- EP-A2- 0 744 334
- DE-A1- 19 642 907
- GB-A- 2 169 065
- US-A- 5 203 213
- US-A- 5 730 030
- Wikipedia Hebel (Physik)
- SMOLIK C. ET AL: 'Fahrrad Lexikon', 2008, BVA BIELEFELDER VERLAG, BIELEFELD
- BARZEL P. ET AL: 'Die Neue Fahrrad Technik', BVA BIELEFELDER VERLAG, BIELEFELD Seiten 250UND - 252
- SMOLIK C. ET AL: 'Das Grosse Fahrradlexikon', 1997, BVA BIELEFELDER VERLAG, BIELEFELD Seiten 242 UND - 251
- DROSDOWSKI G. ET AL: 'DUDEN Deutsches Universalwörterbuch', Bd. 2., 1989, DUDEN VERLAG, MANNHEIM Seite 423
- Internetausdruck Bilder Zahnsegment

## Beschreibung

Die Erfindung betrifft einen Schalter für Fahrradgetriebe gemäß dem Oberbegriff des Anspruchs 1,

Mit der EP 0 352733 B1 ist ein Schalter für Fahrradgetriebe bekannt geworden, bei dem man es sich zur Aufgabe gemacht hat, einen verbesserten Schalter zu schaffen, bei dem es sich um einen Triggerschalter handelt, bei welchem sich das Aufwickeln des Zugseils gegen die Feder des Fahrradgetriebes und die Freigabe des Zugseils durch einen Rastmechanismus durch die Betätigung eines einzigen Hebels bewerkstelligen läßt Gelöst wird diese Aufgabe mit einem Betätigungshebel, der zum Spannen des Zugseils um eine Mittelachse drehbar gelagert ist, wobei von Gangstufe zu Gangstufe eine Rasteinrichtung pro Schaltstufe durchfahren wird, die mit einem Freigabehebel derart entlastet werden kann, daß der Betätigungshebel vom Zugseil in die nachfolgende Raststufe für die nachfolgende Gangstufe zurückgezogen wird. Der Freigabehebel ist integraler Bestandteil des Betätigungshebels, wobei der Freigabehebel in einer Ebene bedient wird, die senkrecht zu der Bedienungsebene des Betätigungshebels steht. Die Drehachse für den Freigabehebel ist in den Betätigungshebel integriert und läuft beim Schalten der einzelnen Gangstufen um die Mittelachse des Betätigungshebels mit um, so daß in den Extremstellungen des Schalters zwischen den Gangstufen der Berggänge und den Gangstufen der Schnellgänge jeweils Positionen für den Betätigungshebel erreicht werden, die in einem für die Ergonomie des Schaltens ungünstigen Bereich angesiedelt sind.

Gemäß dem französischen Patent FR 2 701 917 (93 02255) sind der Freigabehebel und der Betätigungshebel in zwei zueinander parallelen Wirkebenen angeordnet, wobei ein Betätigungsteil um eine gemeinsame Mittelachse vom Betätigungshebel verdreht werden kann, während der Freigabehebel über eine Zahnwippe, die in eine Verzahnung am Betätigungsteil eingreift, dieses Gangstufe für Gangstufe wieder zurückstellt ähnlich einer Zahnwippe in einer mechanischen Uhr, die von einer Unruhe betätigt wird.

Eine bevorzugte Ausführungsform der Erfindung verbindet die Erfindungsmerkmale der EP 0 352 733 B1 mit den Erfindungsmerkmalen der fr fr 2701917 in sofern, als ein Freigabehebel auf ein erstes Zahnsegment und auf ei zweites Zahnsegment wirkt, wobei der Freigabehebel und der Betätigungshebel jeweils in zueinander parallel liegenden Ebenen wirken, wobei die beiden Zahnsegmente durch ein Rastelement verbunden sind, welches als Wippe ausgelegt ist und Rastnasen aufweist, die wechselweise in einmal die eine und einmal die andere Verzahnung der Zahnsegmente eingreifen können. Das Rastelement wird vom Freigabehebel gesteuert, wobei im Freigabehebel eine Kurvenkontur angeordnet ist, die mit dem Rastelement über einen Fortsatz in Verbindung steht, wobei bei der Betätigung des Freigabehebels in einer Richtung das Rastelement mehrmals abwechselnd in die Verzahnungen der beiden Zahnsegmente eingreifen kann. Das Rastelement ist zum des Zahnsegment am Betätigungshebel hin angefedert und erhält auf diese Weise seine Ruhestellung im Eingriff mit diesem Zahnsegment. Wird nun das erste Zahnsegment vom Betätigungshebel verdreht, so gleitet das Rastelement über das Zahnsegment hinweg und der Fortsatz des Rastelementes löst sich von der Kurvenkontur des Freigabehebels ohne eine Funktion auszuüben. Ein Zugseil, weiches durch die Drehung des Zahnsegmentes über den Betätigungshebel aufgewickelt wird, wechselt Gangstufen in dem Fahrradgetriebe und spannt gleichzeitig das Seil gegen eine Feder im Fahrradgetriebe vor. Diese Vorspannung kann von der ersten bis zur letzten Gangstufe erfolgen. Durch den Freigabehebel wird das Seil nachgelassen und die Zahnsegmente werden Zahn für Zahn und Gangstufe für Gangstufe wieder zurückgeführt. Hierbei bringt der Freigabehebel mit seiner Kurvenkontur, welche aus einem aufsteigenden Kurventeil und aus einem absteigenden Kurventeil besteht, das Rastelement mit dem Zahnsegment zuerst in Eingriffstellung und anschließend außer Eingriffstellung. Wird der Freigabehebel losgelassen, so durchläuft der Fortsatz am Rastelement die Kurvenkontur wieder rückwärts und ein zweiter Gangswechsel ist vollzogen. Es erscheint angezeigt, die Kurvenkontur im Bezug auf seine Kurventeile zu verlängern und mehrere aufsteigende und absteigende Kurventeile anzuordnen. Dies bringt es mit sich, daß in einer Hinbewegung des Freigabehebels mehrere Gänge schaltbar sind, wobei sich eine gleich große Anzahl von Gangswechselvorgängen bei dem zurücklaufenden Freigabehebel addieren. Da der Betätigungshebel über eine Klinke mit dem ersten Zahnsegment verbunden ist, wird das Betätigungsteil durch die Betätigung des Freigabehebels bewegt, wobei diese Bewegung über die Klinke vom Betätigungshebel abgekoppelt ist.

Es ist eine Aufgabe der Erfindung, einen Schalter zur Betätigung eines Fahrradgetriebes zu schaffen, der als Triggerschalter ausgebildet ist und ein Seil nicht nur in einer Seilaufwickeldrehrichtung zur Schaltung einer oder mehreren Gangstufen betätigen kann, sondern auch in einer Seilabwickeldrehrichtung über mindestens eine aber auch mehrere Gangstufen durch die Freigabe des Seils schalten kann.

Zur Lösung dieser Aufgabe wird der Schalter mit den Merkmalen des Anspruchs 1 vorgeschlagen.
- Fig. 1: einen Schalter für ein Fahrrad mit einem Gehäuse, einem Betätigungshebel und einem Freigabehebel, sowie ein Rastelement, welches vom Freigabehebel betätigt wird;
- Fig. 2: den Schalter mit einem Betätigungsteil und zwei Zahnsegmenten, in die das von dem Freigabehebel betätigte Rastelement eingreift;
- Fig. 3: den Freigabehebel mit einer Kurvenkontur zur Betätigung des Rastelementes;
- Fig. 4: die Kurvenkontur im Freigabehebel mit mehreren aufsteigenden und absteigenden Kurventeilen;
- Fig. 5: den Betätigungshebel mit einer gehäuseseitig aussteuerbaren Klinke zum Zusammenwirken mit einer Verzahnung an einer zweiten Rastscheibe.

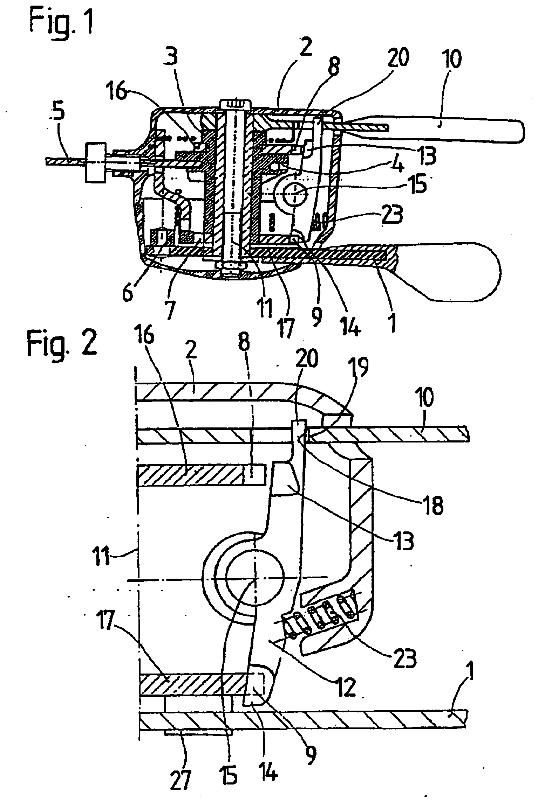

Mit dieser Erfindung wird ein Schalter für ein Fahrradgetriebe beschrieben, der auf einem Lenker eines Fahrrades angeordnet sein kann und dieses Fahrradgetriebe femsteuer. Gemäß Fig. 1 umfaßt der Schalter ein Gehäuse 2 mit einem Betätigungsteil 3, welches von einem Betätigungshebel 1 sowie von einem Freigabehebel 10 bewegt werden kann. Das Betätigungsteil 3 weist eine Aufwickelnut 4 für ein Zugseil 5 auf, das mit dem Fahrradgetriebe verbunden ist und von einer dort befindlichen Feder in Zugspannung gehalten wird. Das Betätigungsteil 3 weist eine erste Rastscheibe 16 mit einem ersten Zahnsegment 8 und eine zweite Rastscheibe 17 mit einem zweiten Zahnsegment 9 auf, wobei das Betätigungsteil 3 mit der ersten Rastscheibe 16 und mit der zweiten Rastscheibe 17 um eine Mittelachse 11 drehbar angeordnet ist. Das Betätigungsteil 3 kann vom Betätigungshebel 1 mittels einer Klinke 6 verdreht werden, wobei diese Klinke 6 in eine Verzahnung 7 eingreift, welche mit dem Betätigungsteil 3 in drehfester Verbindung steht. Bei Bewegung des Betätigungshebels 1 wird diese Bewegung auf das Betätigungsteil 3 über die Klinke 6 übertragen und auf diese Weise das Seil 5 auf die Aufwikkelnut 4 aufgewickelt, wodurch unter Vorspannung der Feder im Fahrradgetriebe Gangstufen verstellt werden.

Gemäß Fig. 2 ist eine leergangfreie Triggereinrichtung dargestellt in Form eines Rastelementes 12 mit einer ersten Rastnase 13 und einer zweiten Rastnase 14, welches auf einer gehäusefesten Drehachse 15 schwenkbar angeordnet ist, wobei gewährleistet ist, daß die erste Rastnase 13 mit dem ersten Zahnsegment 8 und die zweite Rastnase 14 mit dem zweiten Zahnsegment 9 abwechselnd zusammenwirken kann. Das Rastelement 12 ist über eine Feder 23 gegen das Gehäuse 2 angefedert und wirkt mit der zweiten Rastnase 14 mit dem zweiten Zahnsegment 9 der zweiten Rastscheibe 17 im Ruhezustand zusammen, wodurch eine einmal eingestellte Gangstufe im Fahrradgetriebe gehalten wird. Das Rastelement 12 weist einen Fortsatz 20 auf, der mit einer Kurvenkontur 19 im Freigabehebel 10 zusammenwirkt. Der Fortsatz 20 ist mit einer Kante 18 über die Feder 23 ständig mit der Kurvenkontur 19 verbunden und gleitet bei Betätigung des Freigabehebels 10 auf dieser Kurvenkontur 19, wobei das Rastelement 12 eine Wippbewegung aufgezwungen bekommt, die dafür sorgt, daß abwechselnd die zweite Rastnase 14 mit dem zweiten Zahnsegment 9 und die erste Rastnase 13 mit dem ersten Zahnsegment 8 in Eingriff kommt.

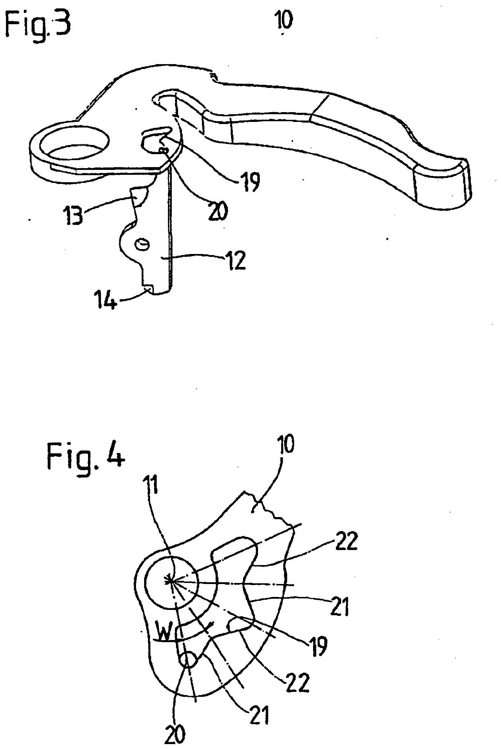

Gemäß den Fig. 3 und 4 ist zu erkennen, daß die Kurvenkontur 19 mindestens einen aufsteigenden Kurventeil 21 und einen absteigenden Kurventeil 22 aufweist, auf denen der Fortsatz 20 entlanggleiten muß.

Zur Funktion der Freigabe des Seiles 5 zur Schaltung der Gangstufen im Fahrradgetriebe zieht die in diesem Fahrradgetriebe befindliche Feder das Seil 5 Gangstufe für Gangstufe zurück, wodurch das Betätigungsteil 3 über die Aufwickelnut 4 dann gedreht wird, wenn durch den Freigabehebel 10 die Halteverbindung zwischen der zweiten Rastnase 14 und dem zweiten Zahnsegment 9 außer Eingriff gebracht wird. In diesem Fall ist der Fortsatz 20 des Rastelements 12 auf den aufsteigenden Kurventeil 21 der Kurvenkontur 19 aufgelaufen, wobei sich der Freigabehebel 10 um einen Teilwinkel W gedreht hat und die erste Rastnase 13 ist mit dem ersten Zahnsegment 8 in Eingriff gekommen ist. In diesem Fall hat sich - wie bei Triggerschaltern üblich - das Seil 5 von der Aufwikkelnut 4 um etwa eine halbe Gangstufe gelöst; die zweite Hälfte der Gangstufe wird dadurch geschaltet, daß sich gemäß Fig. 3 der Fortsatz auf dem absteigenden Kurventeil 22 in seine Ursprungslage zurückbewegt, vorausgesetzt, der Freigabehebel 10 wird um einen weiteren Teilwinkel W weitergedreht. Nach Art von Triggerschaltern kehren nach erfolgter Schaltung der Gangstufen im Fahrradgetriebe alle Hebel wieder in ihre Ausgangsstellung durch Federkraft zurück, was bedeutet, daß der Freigabehebel 10 gemäß Fig. 3 mit seiner Kurvenkontur 19 maximal zwei Gangstufen in Seilabwikkeldrehrichtung schalten kann. Soll nur eine Gangstufe geschaltet werden, so genügt es, den Freigabehebel 10 nur um einen Teilwinkel W weiter zu drehen, bis der Fortsatz 20 das Ende des aufsteigenden Kurventeils erreicht hat. Wird der Freigabehebel 10 sodann losgelassen, so kehrt dieser in seine Ausgangsstellung zurück und der Fortsatz 20 geht in seine Ursprungslage wieder zurück. Da gemäß Fig. 4 die Kurvenkontur 19 vier Teilwinkel W, also zwei aufsteigende Kurventeile 21 und zwei absteigende Kurventeile 22 aufweist, so lassen sich maximal 4 Gangstufen schalten, sofern der Freigabehebel 10 soweit gedreht wird, daß der Fortsatz 20 alle Kurventeile 21 und 22 in beiden Richtungen durchlaufen hat. Zur Erleichterung der Schaltung der Gangstufen in dem Fahrradgetriebe kann eine Rastung im Freigabehebel 10 eingebaut sein, die es dem Fahrer erleichtert, die einzelnen Endpunkte für den Weg des Freigabehebels 10 für die geplanten Gangstufen zu finden.

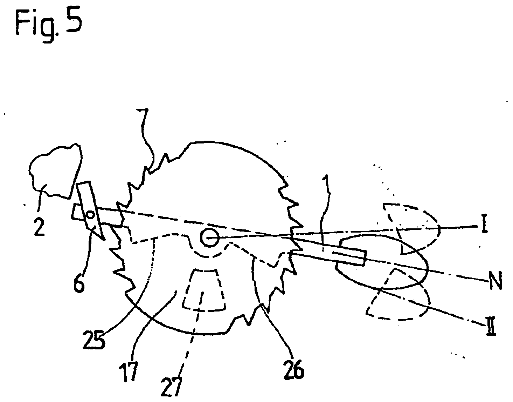

Gemäß Fig. 5 wird ein Betätigungshebel 1 gezeigt, der in der gezeichneten Stellung in einer Ruhestellung N verharrt, solange nicht die erste und die letzte Gangstufe des Fahrradgetriebes eingeschaltet sind. An der zweiten Rastscheibe 17 bzw. am Betätigungsteil 3 ist ein Anschlagfortsatz 27 angeordnet, der mit einem ersten Anschlag 25 und einem zweiten Anschlag 26 am Betätigungshebel 1 dann zusammenwirkt, wenn die erste Gangstufe oder die letzte Gangstufe im Fahrradgetriebe eingeschaltet sind. Unter der Voraussetzung, daß die erste Gangstufe dann eingeschaltet ist, wenn sich der Anschlagfortsatz 27 gegen die Drehrichtung in die äußerste Position verdreht hat, dann ist der erste Anschlag 26 so ausgelegt, daß sich der Betätigungshebel 1 nicht mehr in seine Ruhestellung N zurückziehen kann und in einer Ruhestellung I der ersten Gangstufe stehenbleibt. Eine solche Maßnahme signalisiert dem Fahrer gefühlsmäßig, daß alle Gangstufen durchlaufen sind und die erste Gangstufe erreicht ist Ebenso soll dem Fahrer gefühlsmäßig vermittelt werden, daß durch eine Ruhestellung II der letzten Gangstufe ein Weiterschalten sinnlos wird. Dies wird dadurch erreicht, daß der Anschlagfortsatz 27 im Uhrzeigersinn gegen den ersten Anschlag 25 läuft, wodurch verhindert wird, daß der Betätigungshebel 1 in die Ruhestellung N zurücklaufen kann.

Der Vorteil eines erfindungsgemäß gestalteten Schalters liegt in einer weitgehenden Durchschaltbarkeit der Gangstufen des Fahrradgetriebes sowohl mit dem Betätigungshebel 1 als auch mit dem Freigabehebel 10, wobei das Rastelement 12 beider Hebel 1 und 10 derart entkoppelt, daß die Bewegungen des einen Hebels 1 oder 10 sich nicht auf den anderen Hebel 1 oder 10 übertragen, wobei aber das Triggerprinzip, nämlich die Schaltbarkeit einzelner Gangstufen erhalten bleibt und beide Hebel, nämlich der Betätigungshebel 1 und der Freigabehebel 10, immer in ihre jeweilige Ausgangsposition zurückkehren. Die vorgeschlagene Konstruktion eines Schalters läßt auch zu, daß die erste und die letzte Gangstufe Ruhestellungen 1 und 11 einnehmen, die von der normalen Ruhestellung N verschieden sind, um dem Fahrer vom Gefühl her die Endpunkte der Schaltstufen zu signalisieren, ohne Blickkontakt mit einer Ganganzeige aufnehmen zu müssen.

## Patentansprüche

1. Schalter für Fahrradgetriebe, umfassend einen um eine gehäusefeste Mittelachse (11) drehbar angeordneten Betätigungshebel (1) zur Steuerung eines im Gehäuse (2) ebenfalls drehbar um die Mittelachse (11) angeordneten Betätigungsteils (3) mit einer Aufwickelnut (4) für ein Zugseil (5), wobei eine Klinke (6) mit einer Verzahnung (7) am Betätigungsteil (3) zum Aufwickeln des Zugseils (5) zusammenwirkt, umfassend ferner eine Freigabe- und Haltemechanik, bestehend aus einem ersten Zahnsegment (8) und einem zweiten Zahnsegment (9), die mit dem Betätigungsteil (3) verbunden sind sowie aus einem Freigabehebel (10), der mit dem ersten Zahnsegment (8) und dem zweiten Zahnsegment (9) wechselweise zusammenwirkt,
**dadurch gekennzeichnet,**
**dass** im Gehäuse (2) ein vom Freigabehebel (10) bewegbares, gegenüber dem Freigabehebel (10) gesondertes und von diesem betätigbares Rastelement (12) schwenkbar angeordnet ist, das eine erste Rastnase (13) und eine zweite Rastnase (14) aufweist, wobei die erste Rastnase (13) mit dem ersten Zahnsegment (8) und die zweite Rastnase (14) mit dem zweiten Zahnsegment (9) zusammenwirken, wodurch das Betätigungsteil (3) von einer vom Zugseil (5) aufgebrachten Zugkraft verdreht wird, wenn eine der beiden Rastnasen (13, 14) aus ihrem Eingriff in das Zahnsegment (8, 9) ausgesteuert werden.

2. Schalter nach Anspruch 1,
**dadurch gekennzeichnet,**
**daß** das Rastelement (12) schwenkbar auf einer Drehachse (15) gelagert ist, die im wesentlichen senkrecht zur der Mittelachse (11) gehäusefest angeordnet ist.

3. Schalter nach Anspruch 1 oder 2,
**dadurch gekennzeichnet,**
**daß** die Drehachse (15) von der Mittelachse (11) einen Abstand aufweist, der den Radien der Zahnsegmente (8,9) im wesentlichen entspricht

4. Schalter nach einem der Ansprüche 1 bis 3,
**dadurch gekennzeichnet,**
**daß** die Drehachse (15) etwa in der Mitte des Abstandes zwischen dem ersten Zahnsegment (8) und dem zweiten Zahnsegment (9) angeordnet ist

5. Schalter nach einem der Ansprüche 1 bis 4,
dadurch gekenntzeichnet,
daß das Rastelement (12) in Richtung Eingriff der zweiten Rastnase (14) gegenüber dem Gehäuse (2) angefedert ist.

6. Schalter nach einem der Ansprüche 1 bis 5,
**dadurch gekennzeichnet,**
däß das erste Zahnsegment (8) über eine erste Rastscheibe (16) und das zweite Zahnsegment (9) über eine zweite Rastscheibe (17) mit dem Betätigungsteil (3) drehfest verbunden sind.

7. Schalter nach einem der Ansprüche 1 bis 6.
**dadurch gekennzeichnet,**
**daß** der Freigabehebel (10) zur Betätigung der Freigabe- und Haltemechanik durch ein Rastelement (12) eine Kurvenkontur (19) aufweist, die aus mindestens einem aufsteigenden Kurventeil (12) und einem absteigenden Kurventeil (22) besteht, wodurch bei Betätigung des Freigabehebels (10) mindestens zwei Gangstufen schaltbar sind, während das Rastelement (12) mit der Kurvenkontur (19) zusammenwirkt.

8. Schalter nach Anspruch 7,
**dadurch gekennzeichnet,**
**daß** das Rastelement (12) mit dem Freigabehebel (10) in der Weise zusammenwirkt, daß bei Betätigung des Freigabehebels (10) das Rastelement (12) eine Schaukelbewegung vollführt, bei welcher nacheinander einmal eine erste Rastnase (13) mit dem ersten Zahnsegment (8) und einmal eine zweite Rastnase (14) mit dem zweiten Zahnsegment (9) zum Eingriff kommt.

9. Schalter nach einem der Ansprüche 7 oder 8,
**dadurch gekennzeichnet**
**daß** das Rastelement (12) eine Kante (18) aufweist, die mit einer Kurvenkontur (19) am Freigabehebel (10) zusammenwirkt.

10. Schalter nach einem der Ansprüche 7 bis 9,
**dadurch gekennzeichnet,**
**daß** die Kante (18) Teil eines Fortsatzes (20) am Rastelement (12) ist.

11. Schalter nach einem der Ansprüche 7 bis 10,
**dadurch gekennzeichnet,**
**daß** der Freigabehebel (10) als Triggerhebel ausgebildet ist, der nach jeder Betätigung durch die Rückstellkraft einer Feder (23) in eine Ruheposition (N) zurückkehrt.

12. Schalter nach einem der Ansprüche 1 bis 11,
**dadurch gekennzeichnet,**
**daß** am Betätigungshebel (1) eine Klinke (6) schwenkbar angeordnet ist, die mit einer Verzahnung (24) zusammenwirkt, die mit dem Betätigungsteil (3) verbunden ist.

13. Schalter nach Anspruch 12,
**dadurch gekennzeichnet,**
**daß** die Verzahnung (24) mit einer der beiden Rastscheiben (16,17) verbunden ist.

14. Schalter nach Anspruch 13,
**dadurch gekennzeichnet,**
**daß** die Verzahnung (24) einteilig mit der Rastscheibe (17) verbunden ist.

15. Schalter nach einem der Ansprüche 12, 13 oder 14,
**dadurch gekennzeichnet,**
**daß** sich die Klinke (6) in Ruhestellung des Betätigungshebels (10) außer Eingriff mit der Verzahnung (24) befindet.

16. Schalter nach einem der Ansprüche 1 bis 15,
**dadurch gekennzeichnet,**
**daß** der Betätigungshebel (1) relativ zum Betätigungsteil (3) mindestens einen Anschlag (25,26) aufweist, der mit einem Anschlagfortsatz (27) bei Erreichung der ersten bzw. der letzten Gangstufe zusammenwirkt, wodurch die Ruhestellung (I) des Betätigungshebels (1) in der ersten Gangstufe und/oder die Ruhestellung (II) des Betätigungshebels (1) in der letzten Gangstufe von der normalen Ruhestellung (N) des Betätigungshebels (1) in den übrigen Gangstufen verschieden ist.

## Claims

1. Switch for a bicycle gear, comprising an actuating lever (1) arranged rotatably about a central axis (11) fixed to the housing for controlling an actuating part (3) also arranged in the housing (2) rotatably about the middle axis (11) with a winding groove (4) for a tension cable (5), wherein a pawl (6) engages with a toothing (7) on the actuating part (3) for winding up the tension cable (5), also comprising a release and holding mechanism, consisting of a first tooth segment (8) and a second tooth segment (9), which are connected to the actuating part (3) and a release lever (10) which cooperates alternately with the first tooth segment (8) and the second tooth segment (9)
**characterised in that**
in the housing (2) a detent element (12) movable by the release lever (10), which in relation to the release lever (10) is separated and actuatable by it, is arranged pivotably, which comprises a first detent nose (13) and a second detent nose (14), wherein the first detent nose (13) cooperates with the first tooth segment (8) and the second detent nose (14) with the second tooth segment (9), whereby the actuating part (3) is rotated by a tension force applied by the tension cable (5) when one of the two detent noses (13, 14) is moved out of engagement with the tooth segment (8, 9).

2. Switch according to claim 1,
**characterised in that**
the detent element (12) is pivotably mounted on a rotational axis (15), which is arranged to be fixed to the housing essentially perpendicular to the middle axis (11).

3. Switch according to claim 1 or 2,
**characterised in that**
the rotational axis (15) has a distance from the middle axis (11) which corresponds essentially to the radii of the tooth segments (8, 9).

4. Switch according to one of claims 1 to 3,
**characterised in that**
the rotational axis (15) is arranged in the centre of the distance between the first tooth segment (8) and the second tooth segment (9).

5. Switch according to one of claims 1 to 4,
**characterised in that**
the detent element (12) is spring-loaded relative to the housing (2) towards engagement with the second detent nose (14).

6. Switch according to one of claims 1 to 5,
**characterised in that**
the first tooth segment (8) is rotationally connected to the actuating part (3) by a first detent disc (16) and the second tooth segment (9) by a second detent disc (17).

7. Switch according to one of claims 1 to 6
**characterised in that**
the release lever (10) for activating the release and holding mechanism by a detent element (12) has a cam contour (19) which consists of at least one rising cam part (12) and one falling cam part (22) to allow at least two gear ratios to be shifted upon actuating the release lever (10), while the detent element (12) cooperates with the cam contour (19).

8. Switch according to claim 7,
**characterised in that**
the detent element (12) cooperates with the release lever (10) such that on activating the release lever (10) the detent element (12) performs a rocking motion, during which, in succession, a first detent nose (13), on the one hand, comes into engagement with the first tooth segment (8), and a second detent nose (14), on the other hand, comes into engagement with the second tooth segment (9).

9. Switch according to one of claims 7 or 8,
**characterised in that**
the detent element (12) has an edge (18) that cooperates with a cam contour (19) on the release lever (10).

10. Switch according to one of claims 7 to 9,
**characterised in that**
the edge (18) is part of an extension (20) on the detent element (12).

11. Switch according to one of claims 7 to 10,
**characterised in that**
the release lever (10) is designed as a trigger lever that returns to a rest position (N) through the restoring force of a spring (23) after each actuation.

12. Switch according to one of claims 1 to 11,
**characterised in that**
a pawl (6) is pivotably mounted on the actuating lever (1) cooperating with a toothing (24) connected to the actuating part (3).

13. Switch according to claim 12,
**characterised in that**
the toothing (24) is connected to one of the two detent discs (16, 17).

14. Switch according to claim 13,
**characterised in that**
the toothing (24) is integrally connected to the detent disc (17).

15. Switch according to one of claims 12, 13 or 14,
**characterised in that**
the pawl (6) is out of engagement with the toothing (24) in the rest position of the actuating lever (10).

16. Switch according to one of claims 1 to 15,
**characterised in that**
the actuating lever (1) relative to the actuating part (3) has at least one stop (25, 26), which cooperates with a stop extension (27) when the first or last gear ratio is reached, thereby distinguishing the rest position (I) of the actuating lever (1) in the first gear ratio and/or the rest position (II) of the actuating lever (1) in the last gear ratio from the normal rest position (N) of the actuating lever (1) in the remaining gear ratios.

## Revendications

1. Organe d'actionnement pour changement de vitesses dans une bicyclette, comprenant un levier d'actionnement (1) agencé en rotation autour d'un axe central (11) solidaire d'un boîtier et destiné à commander une pièce d'actionnement (3) agencée dans le boîtier (2) également en rotation autour de l'axe central (11) et comportant une gorge d'enroulement (4) pour un câble de traction (5), dans lequel un loquet (6) coopère avec une denture (7) sur la pièce d'actionnement (3) pour l'enroulement du câble de traction (5), comprenant en outre un mécanisme de libération et de maintien, constitué par un premier secteur denté (8) et par un second secteur denté (9) qui sont reliés à la pièce d'actionnement (3), ainsi que par un levier de libération (10) qui coopère alternativement avec le premier secteur denté (8) et avec le second secteur denté (9),
**caractérisé en ce**
**qu'**un élément d'enclenchement (12) déplaçable par le levier de libération (10), séparé par rapport au levier de libération (10) et actionnable par celui-ci, est agencé en pivotement dans le boîtier (2) et comporte un premier ergot d'enclenchement (13) et un second ergot d'enclenchement (14), le premier ergot d'enclenchement (13) coopérant avec le premier secteur denté (8) et le second ergot d'enclenchement (14) coopérant avec le second secteur denté (9), ce par quoi la pièce d'actionnement (3) est mise en rotation par une force de traction appliquée par le câble sous tension (5) lorsque l'un des deux ergots d'enclenchement (13, 14) est commandé pour sortir de son engagement dans le secteur denté (8, 9).

2. Organe d'actionnement selon la revendication 1,
**caractérisé en ce**
**que** l'élément d'enclenchement (12) est monté en pivotement sur un axe de rotation (15) qui est agencé solidairement dans le boîtier sensiblement perpendiculairement à l'axe central (11).

3. Organe d'actionnement selon la revendication 1 ou 2,
**caractérisé en ce**
**que** l'axe de rotation (15) est à une distance de l'axe central (11) qui correspond essentiellement aux rayons des secteurs dentés (8, 9).

4. Organe d'actionnement selon l'une des revendications 1 à 3,
**caractérisé en ce**
**que** l'axe de rotation (15) est agencé approximativement au milieu de la distance entre le premier secteur denté (8) et le second secteur denté (9).

5. Organe d'actionnement selon l'une des revendications 1 à 4,
**caractérisé en ce**
**que** l'élément d'enclenchement (12) est monté avec effet élastique par rapport au boîtier (2) dans la direction de l'engagement du second ergot d'enclenchement (14).

6. Organe d'actionnement selon l'une des revendications 1 à 5,
**caractérisé en ce**
**que** le premier secteur denté (8) est relié solidairement en rotation à la pièce d'actionnement via un premier disque d'enclenchement (16), et le second secteur denté (9) est relié solidairement en rotation à la pièce d'actionnement (3) via un second disque d'enclenchement (17).

7. Organe d'actionnement selon l'une des revendications 1 à 6,
**caractérisé en ce**
**que** le levier de libération (10) comporte, pour l'actionnement du mécanisme de libération et de maintien au moyen d'un élément d'enclenchement (12), un contour en courbe (19) qui est formé par au moins une partie de courbe montante (12) et par une partie de courbe descendante (22), grâce à quoi, lors de l'actionnement du levier de libération (10), il est possible de passer au moins deux rapports de vitesse, pendant que l'élément d'enclenchement (12) coopère avec le contour en courbe (19).

8. Organe d'actionnement selon la revendication 7,
**caractérisé en ce**
**que** l'élément d'enclenchement (12) coopère avec le levier de libération (10) de telle manière que lors de l'actionnement du levier de libération (10), l'élément d'enclenchement (12) exécute un mouvement basculant, dans lequel un premier ergot d'enclenchement (13) vient en engagement avec le premier secteur denté (8) et successivement un second ergot d'enclenchement (14) vient en engagement avec le second secteur denté (9).

9. Organe d'actionnement selon l'une des revendications 7 ou 8,
**caractérisé en ce**
**que** l'élément d'enclenchement (12) comporte une arête (18) qui coopère avec un contour en courbe (19) sur le levier de libération (10).

10. Organe d'actionnement selon l'une des revendications 7 à 9,
**caractérisé en ce**
**que** l'arête (18) fait partie d'un prolongement (20) sur l'élément d'enclenchement (12).

11. Organe d'actionnement selon l'une des revendications 7 à 10,
**caractérisé en ce**
**que** le levier de libération (10) est réalisé à la manière d'un levier à gâchette qui revient après chaque actionnement jusque dans une position de repos (N) sous la force de rappel d'un ressort (23).

12. Organe d'actionnement selon l'une des revendications 1 à 11,
**caractérisé en ce**
**qu'**un loquet (6) est agencé en pivotement sur le levier d'actionnement (1) et coopère avec une denture (24) qui est reliée à la partie d'actionnement (3).

13. Organe d'actionnement selon la revendication 12,
**caractérisé en ce**
**que** la denture (24) est reliée à l'un des deux disques d'enclenchement (16, 17).

14. Organe d'actionnement selon la revendication 13,
**caractérisé en ce**
**que** la denture (24) est reliée d'un seul tenant avec le disque d'enclenchement (17).

15. Organe d'actionnement selon la revendication 12, 13 ou 14,
**caractérisé en ce**
**que** le loquet (6) se trouve dans la position de repos du levier d'actionnement (10) en dehors d'un engagement avec la denture (24).

16. Organe d'actionnement selon l'une des revendications 1 à 15,
**caractérisé en ce.**
**que** le levier d'actionnement (1) comporte, par rapport à la pièce d'actionnement (3), au moins une butée (25, 26) qui coopère avec un prolongement de butée (27) lorsqu'on atteint le premier ou le dernier rapport de vitesse, grâce à quoi la position de repos (I) du levier d'actionnement (1) dans le premier rapport de vitesse et/ou la position de repos (II) du levier d'actionnement (1) dans le dernier rapport de vitesse, diffère de la position de repos normal (N) du levier d'actionnement (1) dans les rapports de vitesse restants.
